# EUROPEAN PATENT SPECIFICATION

(11) **EP 1 312 469 B1**
(45) Date of publication and mention of the grant of the patent: **09.02.2005**
(21) Application number: 01947478.2
(22) Date of filing: 11.07.2001
(51) Int. Cl.: B32B 25/04, B32B 25/08, B29C 43/00, C08J 5/12, C08L 21/00

(54) **COMPACTED MATERIAL COMPRISING A POLYURETHANE ELASTOMER AND RUBBER, METHOD FOR OBTAINING SAID MATERIAL AND APPLICATIONS THEREOF**
VERDICHTETES MATERIAL ENTHALTEND EIN POLYURETHAN UND GUMMI, METHODE ZUR ERLANGUNG DES MATERIALS UND DESSEN ANWENDUNGEN
MATERIAU COMPACTE COMPRENANT UN ELASTOMERE DE POLYURETHANNE ET DU CAOUTCHOUC, PROCEDE PERMETTANT D'OBTENIR LEDIT MATERIAU ET APPLICATIONS CORRESPONDANTES

(30) Priority: 11.08.2000 ES 200002070
(43) Date of publication of application: 21.05.2003
(73) Proprietor: Indesproin, S.L., 8755 Castellbisba (ES)
(72) Inventor: PALENZUELA SOLDEVILA, Pio, E-08240 Manresa (ES)
(74) Representative: Carpintero Lopez, Francisco
(86) International application number: PCT/ES2001/000279
(87) International publication number: WO 2002/014068

(56) References cited:
- EP-A- 0 917 950
- WO-A-95/00331
- ES-T- 2 114 863
- FR-A- 2 210 508
- GB-A- 1 500 469
- US-A- 3 980 595
- US-A- 4 552 816
- US-A- 4 666 782

## Description

### FIELD OF THE INVENTION

The invention relates to a compacted material comprising a polyurethane elastomer and rubber, to a method for obtaining it that involves mixing, molding and pressing the raw materials and to the use of said material.

### BACKGROUND OF THE INVENTION

There are numerous products currently used in construction and engineering work, as well as in various fields of the art such as the automobile industry, the aeronautics industry, the naval industry, etc. for their insulating properties (thermal, acoustic, electrical), as well as their properties for fire-protection, water proofing, aesthetic and other. Despite this, the need remains to find new materials that can be easily processed and handled to give them the desired properties.

The invention provides a solution to the current needs that consists of developing a compacted material comprising a polyurethane elastomer and rubber that can in addition incorporate suitable additives to give the material the desired properties.

Polyurethane is a polymer of urethane resulting from the reaction of a polyisocyanate with a polyol, which can be obtained in the form of elastomers or flexible or stiff foams. Polyurethane elastomers are made of flexible macromolecule chains that form a three-dimensional lattice. They are generally amorphous, have a very low vitreous transition temperature and are elastic. Polyurethanes in general have good mechanical properties, particularly stability, elasticity and fatigue strength, and adhere very well to many materials.

Rubber is a natural or synthetic polymer with a high molecular mass, which shows elasticity at room temperature and which is normally used vulcanized, so that a certain degree of cross-linkage is obtained in its structure. Certain properties of rubber, such as its tensile strength and wear resistance can be increased by means of suitable additives.

An object of this invention is a compacted material comprised of a polyurethane elastomer and rubber, as an option having one or more additives that give the material the desired properties. Also objects of this invention are finished products made from this material.

A further object of the invention is a method for obtaining this material that comprises the mixture of the raw materials, its molding and pressing.

An additional object of this invention is the use of said compacted material to manufacture finished products with applications in construction and in any type of industry.

### DETAILED DESCRIPTION OF THE INVENTION

The invention provides a compacted material that comprises a polyurethane elastomer and rubber, hereinafter referred to as the material of the invention. The polyurethane elastomer is present in the material of the invention in amounts between 5% and 40% by weight with respect to the total weight, while rubber can be present in the material of the invention in amounts between 95% and 60% by weight with respect to the total weight.

The polyurethane elastomer is obtained in situ by the reaction of a isocyanate terminated polyurethane prepolymer with a polyol. Polyurethane can act as a monocomponent adhesive without solvents for the rubber and the additives that can, as an option, be present in the material of the invention.

The isocyanate terminated polyurethane prepolymer, hereinafter polyurethane prepolymer, is a commercially available product or can be easily obtained from reacting a hydroxy-finished polymer with excess diisocyanate. The polyurethane prepolymer can be any polymer finished at each of its ends with an isocyanate group. The invention considers, in general, the full or generalized use of polyurethane prepolymers that contain aromatic groups. In a particular example, the polyurethane prepolymer is a product obtained by reacting a polyol with excess aromatic isocyanates, such as the one commercialized by CROMOGENIA-UNITS, S.A., under the name FORZAL AGL, an aromatic polyurethane prepolymer finished in isocyanate.

A polyol is an alcohol containing 2 or more hydroxyl groups, such as butanediol, hexanediol, trimethylol propane, etc. In a specific example the polyol is 1,4-butanodiol. By extension, the term polyol includes polyesters and polyethers, as is general in the field of the production of polyurethanes.

The rubber that can be present in the material of the invention can be of any type (natural or synthetic) and origin, both recycled or not recycled. In a specific example the rubber used is recycled rubber of any type, both vulcanized and not, such as recycled rubber from used tires; manufacturing surpluses, cutouts, defective parts, etc. from vulcanized rubber factories; waste from vehicle scrapping such as seats, workshops, mats, parts of tires, etc. containing rubber. The various materials that contain rubber and can be used as raw material for producing the material of the invention can be classified in groups with respect to their quality, quantity, etc.

The grain size of the rubber is an important factor, as the homogeneity of the mixture depends on it. Thus, regardless of the substrate which can be conveniently added to obtain a greater volume, less weight, better soundproofing, etc., the use of a suitable grain size in each case will allow to even out the losses or excess spaces in the mass.

In a specific example the invention considers the use of a rubber powder, normally in a proportion of 5 to 80%, with the following grain size distribution:

| Sieve | ASTM mesh | Retention |
|---|---|---|
| 1.40 mm | 14 | -- |
| 1.00 mm | 18 | 10% (maximum) |
| 0.60 mm | 30 | 60 - 80% |
| 0.30 mm | 50 | 15 - 30% |
| < 0.30 mm | remainder | 10% (maximum) |

In another specific example, the invention considers the use of a special rubber powder, normally in a proportion of 5 to 75%, with the following grain size distribution:

| Sieve | ASTM mesh | Retention |
|---|---|---|
| 1.00 mm | 18 | -- |
| 0.60 mm | 30 | 0.5% (maximum) |
| 0.30 mm | 50 | 60 - 80% |
| 0.15 mm | 100 | 15 - 25% |
| < 0.15 mm | remainder | 0.5 - 20% |

In another specific example, the invention considers the use of rubber chippings, normally in a proportion of 5 to 80%, with the following grain size distribution:

| Sieve | ASTM mesh | Retention |
|---|---|---|
| 4.00 mm | 05 | 0.3% (maximum) |
| 3.00 mm | 07 | 15 - 25% |
| 2.00 mm | 10 | 55 - 65% |
| 1.00 mm | 18 | 15 - 25% |
| < 1.00 mm | remainder | 0.3% (maximum) |

In another specific example, the invention considers the use of a rubber fiber, usually in a proportion of 5 to 80%, with the following grain size distribution:

| Sieve | ASTM mesh | Retention |
|---|---|---|
| 4.00 mm | 05 | 0.3% (maximum) |
| 2.00 mm | 10 | 0,5 - 15% |
| 1.40 mm | 14 | 25 - 45% |
| 1.00 mm | 18 | 30 - 50% |
| < 1.00 mm | remainder | 10 - 20% |

The invention also considers the possibility of using mixtures of rubber powder, chippings and fibers with different grain sizes.

The material of the invention may contain one or more additives specifically meant to provide the material of the invention with properties that make it better suited for its intended function. The great versatility of the material of the invention allows making advantageous transformations to it in order to provide it, for example with fireproofing properties, such as antimony trioxide, hydrated alum; sound insulating properties properties, such as by adding sound insulators or using a balanced composition of materials with adequate grain sizes and certain thickness; chromatic properties, by adding pigments which can color the material of the invention, such as iron oxide (red, rust, ochre, green), titanium oxide (white), chromium yellow (red), etc.; waterproofing, by incorporating waterproofing materials or by pressure compacting of the material of the invention, preferably obtained from raw materials with a small grain size; thermal insulation, by using additives which provide heat insulation characteristics; weather resistance; etc.

The material of the invention may also include a core to eliminate or reduce its flexibility, such as when the material of the invention adopts the configuration of a board with a significant thickness in order to prevent its deformation. The core may be of any material and must be capable of adding strength and stiffness to the material of the invention. In a specific example, the core is a plastic material such as a recycled plastic, for example, polyethylene (PE), polypropylene (PP), polystyrene (PS), polyester (PET), etc. ground and extruded.

The characteristics of the material of the invention allow it to adopt any configuration.

Because of the agglomeration capacity of polyurethane and rubber, the material of the invention can take the form of a single composite layer including all the components, or as a material made from several clearly differentiated layers. In this latter case, the material of thee invention can be obtained by placing the various layers in the desired order in a mold and then applying the pressure required to compact the material in a single press, or by preparing and pressing each layer separately and then mixing them and pressing them together, or in an alternative example, the components of a first layer are deposited in the mold and pressed, then on top of said first layer that is still in the mold the components of a second layer are deposited and pressed again, and so on until the total number of layers have been deposited and the desired product has been obtained. This last alternative is particularly suitable when different pressures are required to compact the different layers. As an option, if desired the material can be allowed to dry between successive presses.

Given the characteristics of the material of the invention, it is possible to obtain any product that can be obtained by molding, pressing and agglomeration. The material of the invention, because of its properties, can be used in any industry, such as in construction as part of ceilings, roofs, floors and wall coatings, etc.; in engineering work, such as in construction of roads, bridges, etc.; in urban development, such as in pavements, etc.; and in general in any industry that requires the use of elastic materials with good mechanical properties, such as stability, elasticity and fatigue strength as well as other interesting properties such as fire-proofing, insulating, water-proofing, adhering, etc. By way of example, the material of the invention can be given the form of roof tiles (with an without insulation); floor tiles (with and without insulation); wall panels; false ceilings; composite materials for roads; road safety barriers; surfacing for rural roads; pavements for squares and streets; protective panels for garages; baseboards; noise, vibration and deformation force absorbers (Silent blocks); staircases; attics without beams; very strong and adaptable waistboards; tabletops; etc.

In its simplest example the material of the invention consists of only polyurethane elastomer and rubber, compacted, molded into the form of a board, plate, panel or tile and pressed to obtain a product with a given thickness. An illustrative example of this specific example consists of a material configured by molding and pressing into the form of a tile, with the following formulation:

| | |
|---|---|
| Polyurethane elastomer | 20% |
| Rubber | 80% |

where percentages are by weight with respect to the total weight.

In another specific example the material of the invention comprises a polyurethane elastomer and rubber, molded and pressed into the form of a silent block, with the following formulation:

| | |
|---|---|
| Polyurethane elastomer | 40% |
| Rubber chippings (1-3 mm) | 30% |
| Rubber powder (0.6 mm) | 30% |

where percentages are by weight with respect to the total weight and the figures in brackets are the grain size of the component.

In another specific example, the material of the invention comprises a polyurethane elastomer, rubber and cloth, molder into the form of a board, plate, panel or tile, and pressed until obtaining a product with a given thickness. An illustrative example of this specific example consists of a material configured by molding and pressing into the form of a hard compact panel, with the following formulation:

| | |
|---|---|
| Polyurethane elastomer | 30% |
| Rubber chippings (1-3 mm) | 40% |
| Rubber fiber and substrates | 20% |
| Cloth | 10% |

where percentages are by weight with respect to the total weight and the figures in brackets are the grain size of the component.

In another specific example, the material of the invention comprises a polyurethane elastomer, rubber and additives which provide insulating characteristics, molded into the form of a board, plate, panel or tile and pressed until obtaining a product with a given thickness. An illustrative example of this specific example consists of a material configured by molding and pressing into the form of an insulating tile, with the following formulation:

| | |
|---|---|
| Rubber fiber (1-3 mm) | 31% |
| Rubber powder (0.6-1 mm) | 24% |
| Recycled substrates (1-4 mm) | 19% |
| Recycled cloths (0.5 x 1 cm) | 7% |
| Polyurethane elastomer | 19% |

where percentages are by weight with respect to the total weight and the figures in brackets are the grain size of the component. The term 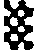 recycled substrates 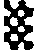 includes all previously used materials (such as foam, fiber, plastic and their mixtures).

In another specific example, the material of the invention comprises a polyurethane elastomer, rubber and additives which provide insulating characteristics, molded into the form of a board, plate, panel or tile and pressed until obtaining a product with a given thickness. An illustrative example of this specific example consists of a material configured by molding and pressing into the form of an insulating floor tile with a lower insulating later and a top layer or tile, with the layers having the following formulations:

| Insulating layer: | |
|---|---|
| Rubber fiber (2-5 mm) | 30% |
| Rubber chippings (1-3 mm) | 20% |
| Recycled substrates (1-4 mm) | 12% |
| Recycled cloth (0.5 x 1 cm) | 10% |
| Polyurethane elastomer | 28% |

| Tile : | |
|---|---|
| Rubber (impurity-free powder, 0.6 microns) | 60 % |
| Rubber (impurity-free powder, 1 micron) | 20 % |
| Polyurethane elastomer | 20 % |

where percentages are by weight of total weight of each layer and the figures in brackets show the grain size of the component.

In another specific example the material of the invention is agglomerate for industrial roofing with tile, insulating later and without a core with the composition [A] or [B] of Example 4.

The material of the invention provides similar properties to a conventional vulcanized rubber, with the property that it is not necessary to use high temperatures to obtain it, nor vulcanization reagents as sulfur and accelerators, so that is possible to speak of a cold vulcanization without using solvents, with the resulting energy saving and environmental advantages, as in accordance with this invention it suffices to add the polyurethane prepolymer to the rubber with the required humidity in order to form an agglomerate. The required degree of curing can be obtained by adding polyol to the polyurethane prepolymer.

The possibility of using rubber from recycling any material containing rubber as a raw material also provides a solution to the environmental problem posed by the management and processing of these residues.

The material of the invention shows an ideal adaptation capability and can adapt to any space or shape desired, further allowing perforations, mutilations, etc. as well as allowing foreign elements such as metals (iron, steel, aluminum, etc.), concrete, wood, etc. to come in contact with it, with the addition of the corresponding adhesive.

The invention also provides a method for obtaining the material of the invention, hereinafter referred to as the method of the invention, which comprises:
a) Mixing a polyurethane prepolymer finished in isocyanate with a polyol until obtaining a homogenous mixture;
b) Adding rubber to said homogenous mixture of polyurethane prepolymer and polyol;
c) Adding the mixture resulting from stage b) to a mold in order to form it by pressing;
d) Closing the mold and applying the required pressure for a suitable time in order to compact the mixture introduced in the mold;
e) Drying the compacted material resulting from the press at a suitable temperature and for a suitable time, without removing the mold lid; and
f) Demolding the compacted material made of polyurethane and rubber.

The polyurethane prepolymer finished in isocyanate can be any polymer finished at each of its ends with an isocyanate group. In a specific example, said polymer contains aromatic groups.

A polyol is an alcohol with 2 or more hydroxyl groups, such as butanediol, hexanediol, trimethylol propane, etc. In a specific example the polyol is 1,4-butanediol.

The rubber can be of any type and origin, both recycled and not, and may be in any form, such as powder, chippings or fiber. The rubber grain size distribution plays an important role in obtaining a material of the invention with suitable properties. Each application requires using a specific type of rubber a specific grain size, as its hardness, configuration, elongation etc. plays a crucial role in its final finish. Likewise, depending on the rubber grain size both the weight and the thickness of the material of the invention can be controlled.

Rubber powder can be produced mechanically from any material containing rubber, whether recycled or not. In a specific example the rubber powder is obtained from tire strips or full tires, passing the material through a sieve with a mesh opening of 1 mm or less. The rubber powder may or may not be free of impurities and metal particles.

Rubber chippings can be produced mechanically from any material containing rubber, whether recycled or not. In a specific example the rubber chippings are obtained from tire strips or full tires, and has a particle size of between 1 and 5 mm. The rubber may or may not be free of impurities and metal particles.

Rubber fiber can be produced mechanically from any material containing rubber, whether recycled or not. In a specific example the rubber fiber is obtained from scraping or grinding tires, tire residues, or from vehicle scrapping, has a particle size between 1 and 50 mm, and may or may not be free of impurities and metal particles.

Any mold may be used that allows obtaining the material of the invention in the desired configuration.

The pressure applied is essential to compact the mixture of raw materials and obtain the material of the invention. The pressure is applied by conventional methods, such as with a press. The pressure to apply is generally less than 500 kg/cm² (approximately 49 MPa) [1 kg/cm² = 0.098 Pa approximately], preferably between 1 and 100 kg/cm² (approximately 0.098 and 9.8 MPa).

The method of the invention can be performed at a temperature between 15°C and 85°C. A suitable temperature is room temperature, approximately 20°C, although it may be of interest to use higher temperatures that will aid drying of the material of the invention, and therefore a faster management of the handling and demolding. If a much faster drying is wished it may be forced by using a drying oven.

The handling time (pressing) is normally less than 36 hours, while drying time is normally less than 3 days after finishing the pressing.

Suitable additives can be used to provide the material of the invention with desired properties. By way of example, additives that may be added include fireproofing agents, such as antimony trioxide or hydrated alum in amounts ranging between 15% and 25% by weight with respect to the total weight. In a specific example, by adding to the mixture from the start the amounts of fireproofing agent as per specifications and degree desired and as set by ordinances it is possible to obtain the certification of the material of the invention as a fireproof product.

In the event that the material of the invention includes pigments, these may be added incorporated to the mass or superficially, in one or several layers of the material of the invention. The amounts range between 0.5 and 5 g/cm² [grams of pigment per cm² of surface of the material of the invention] for the case of surface pigmentation, and 1 to 5% by weight for mass pigmentation.

In a specific example, when the material of the invention comprises a polyurethane elastomer and rubber and is configured as a compacted plate, the method of the invention can be performed as follows:
- In a vessel are mixed the polyurethane prepolymer finished in isocyanate and the polyol, shaking until a full homogenization is achieved; then the rubber is added to obtain a product with a gum-like appearance, continuing to shake until the gum is completely wetted;
- The resulting mixture is introduced in a mold and the corresponding pressure is applied, ensuring that the mixture is even and identically dosed throughout all the spaces of the mold; and
- When the mold is sufficiently compacted, and without removing the lid, it is allowed to dry for the required time and the product is removed from the mold, then manipulating or processing the product if desired.

In another specific example, then the material of the invention comprises a polyurethane elastomer, rubber and additives, and it is configured in the form of a compacted plate, the method of the invention can be performed as follows:
- the polyurethane prepolymer finished in isocyanate is mixed in a vessel with the polyol, shaking until a homogenous paste is obtained;
- in another vessel are mixed, dry, the suitable amounts of rubber fibers (o chippings), with the suitable grain size, and in another vessel is mixed the rubber powder with the suitable grain size;
- after this a mixer is used to mix the different components, for which the homogenous mixture of polyurethane prepolymer and polyol is added first, then the mixture of rubber fiber and finally the mixture of rubber powder; these components are added in the stated order and by parts, normally 25% of the required amount of each component at each time until the first cast is finished;
- the first cast is poured into the mold, ensuring that it is correctly leveled and dosed;
- aside from this, the tile is fabricated, which must be placed on the surface of the first cast; for this, the necessary amounts are prepared of polyurethane prepolymer and the polyol, then they are mixed evenly and the suitable amounts of rubber powder are added until obtaining a homogenous mixture;
- the homogenous mixture corresponding to the tile is poured on the first cast, ensuring that it is correctly leveled and dosed;
- after this the mold is closed and pressing is performed at the suitable temperature and for the time required to obtain the desired thickness; and
- finally it is allowed to dry for the required time to then remove it from the mold.

In another specific example, when the material of the invention comprises a polyurethane elastomer, rubber, additives (fireproofing agents, pigments) and a core, and it is configured in the form of a compacted plate, the method of the invention can be performed as follows:
- the full amount of polyurethane elastomer needed to obtain the material of the invention (including the polyurethane elastomer present in the tile) is prepared in a vessel by mixing the polyurethane prepolymer finished in isocyanate with the polyol, shaking until a homogenous paste is formed; then one or more fireproofing agents are added, such as antimony trioxide, hydrated alum or their mixtures, in the suitable proportions, to form a paste;
- from the previously obtained paste is separated the amount of paste required to fabricate the tile;
- to the resulting paste is added slowly the mixture of rubber fibers, and later the mixture of rubber powder, prepared previously;
- in the corresponding mold is placed a thin layer, approximately 1 mm thick, of the previously obtained paste and it is extended evenly throughout the entire mold, in the form of a carpet, above which are placed the cores vertically and with the separation corresponding to the intended use and its linking and stability elements. Afterwards the rest of the cast is added;
- then the tile is fabricated, which must be well spread and leveled above the previous cast; for this, the part of homogenous paste containing the polyurethane prepolymer and the polyol prepared and separated previously is taken the rubber powder is added to it until the desired mixture is obtained;
- the resulting mixture is poured on the previous cast, properly leveling and dosing it;
- afterwards, before closing the mold and in dry, the pigment powder to be added is scattered with a sieve; the mold is then closed and the suitable pressure applied for the suitable time, allowing to dry and proceeding to remove the mold.

The following examples are meant to illustrate the invention and should not be considered as a limitation of its scope.

The polyurethane prepolymer used in all examples is an aromatic polyurethane prepolymer finished in isocyanate commercialized by CROMOGENIA-UNITS, S.A., under the name FORZAL AGL.

### EXAMPLE 1

### Compacted material made from a polyurethane elastomer and rubber

A material is prepared with the following composition:

| Component | % weight of total weight |
|---|---|
| Polyurethane elastomer | 20 |
| Rubber | 80 |

The adequate amounts of polyurethane prepolymer finished with isocyanate groups and 1,4-butanediol are mixed to obtain the desired amount of polyurethane elastomer, snaking until a homogenous mixture is obtained. Rubber powder free of impurities is then added and mixed, obtaining a product similar in appearance to a gum, and shaking is continued until the mixture is well humidified.

The resulting mixture is placed in a mold at room temperature; the mold is then closed and a pressure is applied of 10 kg/cm² (0.98 MPa approximately) for 6 hours, ensuring that the mixture is leveled and dosed identically throughout all the spaces of the mold. The product is then sufficiently compacted and it is allowed to dry at 80°C for 48 hours, without removing the mold lid. After this time the mold is removed, obtaining a compacted material that contains a polyurethane elastomer and rubber and which can be subsequently processed is desired.

### EXAMPLE 2

### compacted material made from a polyurethane elastomer, rubber and glass fiber

The procedure described in Example 1 was repeated, with the required changes, which involved adding glass fiber and drying at 35°C for 18 hours, to obtain a compacted material made of a polyurethane elastomer, rubber and glass fiber, with the following composition:

| Component | % weight of total weight |
|---|---|
| Polyurethane elastomer | 20 |
| Rubber | 40 |
| Glass fiber | 40 |

### EXAMPLE 3

### Compacted material made from a polyurethane elastomer, rubber, substrates and glass fiber

The procedure described in Example 2 was repeated, with the required changes, which involved adding substrates, to obtain a compacted material made from a polyurethane elastomer, rubber, substrates and glass fiber, with the following composition:

| Component | % weight of total weight |
|---|---|
| Polyurethane elastomer | 25 |
| Rubber | 30 |
| Substrates | 15 |
| Glass fiber | 30 |

### EXAMPLE 4

### Agglomerate for an industrial roof with tile, insulating layer and without a core

The agglomerates for industrial roofs with tile, insulating layer and without a core were prepared according to the above described procedures, with the compositions as shown below:

| | **Agglomerate** | |
|---|---|---|
| | **[A]** | **[B]** |
| Insulating layer | | |
| Rubber fiber (2-5 mm) | 20% | 10% |
| Rubber chippings (1-3 mm) | 15% | 20% |
| Rubber power (0.3-1 mm) | 15% | 20% |
| Recycled substrate (1-4) | 12% | 12% |
| Recycled cloths (0.5-1 cm | 10% | 10% |
| Polyurethane elastomer | 28% | 28% |

| Tile | | |
|---|---|---|
| Rubber | | |
| (powder without impurities, 0.6µm) | 60% | 65% |
| Rubber (powder without impurities, 1µm) | 20% | 15% |
| Polyurethane elastomer | 20% | 20% |

Where percentages are by weight with respect to the total weight of each layer and the figures in brackets represent the grain size of the component.

The agglomerate [A] showed good acoustic properties, was spongy and easy to handle, particularly well suited for difficult installations. On its part the agglomerate [B] had worse acoustic properties than the agglomerate [A], but was harder and well suited to be used as a support for foreign bodies.

## Claims

1. A compacted material comprising a mixture of a polyurethane elastomer and rubber, which comprises between 5% and 40% by weight of polyurethane elastomer.

2. A material as in claim 1, which comprises between 95% and 60% by weight of rubber.

3. A material as in claim 1, in which said polyurethane elastomer is obtained in situ by reacting a isocyanate terminated polyurethane prepolymer with a polyol.

4. A material as in claim 3, in which said isocyanate terminated polyurethane prepolymer contains aromatic groups.

5. A material as in claim 3, in which said polyol is 1,4-butanediol.

6. A material as in claim 1, in which the rubber is selected from among natural rubber, synthetic rubber, recycled rubber, non-recycled rubber and their mixtures.

7. A material as in claim 6, in which the rubber is a recycled rubber.

8. A material as in claim 1, which further comprises one or more additives selected from among fireproofing agents, thermal insulators, sound insulating materials, electrical insulators, pigments, waterproofing materials and their mixtures.

9. A material as in claim 1, which further comprises a core that allows to eliminate or reduce the flexibility of the material.

10. A material as in claim 9, in which said core is made of a plastic material.

11. A material as in claim 11, in which said core is made of a plastic material selected from among polyethylene (PE), polypropylene (PP), polystyrene (PS), polyester (PET) and their mixtures, ground and extruded.

12. A material as in claim 1, configured as a single compacted layer.

13. A material as in claim 1, configured as a tile having the following compositions:
| | |
|---|---|
| Polyurethane elastomer | 20% |
| Rubber | 80% |
where percentages are the weight with respect to the total weight.

14. A material as in claim 1, configured as a silent block with the following composition:
| | |
|---|---|
| Polyurethane elastomer | 40% |
| Rubber chippings (1-3 mm) | 30% |
| Rubber powder (0.6 mm) | 30% |
where percentages are the weight with respect to the total weight and the figures in brackets show the grain size of the component.

15. A material as in claim 1, configured as a hard composite panel with the following composition:
| | |
|---|---|
| Polyurethane elastomer | 30% |
| Rubber chippings (1-3 mm) | 40% |
| Rubber fiber and substrates | 20% |
| Cloth | 10% |
where percentages are the weight with respect to the total weight and the figures in brackets show the grain size of the component.

16. A material as in claim 1, configured as an insulating tile with the following composition:
| | |
|---|---|
| Rubber fiber (1-3 mm) | 31% |
| Rubber fiber (0.6-1 mm) | 24% |
| Recycled substrate (1-4 mm) | 19% |
| Recycled cloths (0.5 x 1 cm) | 7% |
| Polyurethane elastomer | 19% |
where percentages are the weight with respect to the total weight and the figures in brackets show the grain size of the component.

17. A material as in claim 1, configured as an insulating floor tile with a bottom insulating layer and a top layer or tile, with the following composition of its layers:
| Insulating layer: | |
|---|---|
| Rubber fiber (2-5 mm) | 30% |
| Rubber chippings (1-3 mm) | 20% |
| Recycled substrates (1-4 mm) | 12% |
| Recycled cloths (0.5 x 1 cm) | 10% |
| Polyurethane elastomer | 28% |
| Tile: | |
|---|---|
| Rubber (powder without impurities, 0,6 microns) | 60% |
| Rubber (powder without impurities, 1 micron | 20% |
| Polyurethane elastomer | 20% |
where percentages are the weight with respect to the total weight and the figures in brackets show the grain size of the component.

18. A material as in claim 1, configured as an insulating tile without a core, which includes a bottom insulating layer and a top layer or tile, with the following compositions [A] or [B] of its layers:
| | **[A]** | **[B]** |
|---|---|---|
| Insulating layer | | |
| Rubber fiber (2-5 mm) | 20% | 10% |
| Rubber chippings (1-3 mm) | 15% | 20% |
| Rubber power (0.3-1 mm) | 15% | 20% |
| Recycled substrate (1-4) | 12% | 12% |
| Recycled cloths (0.5-1 cm) | 10% | 10% |
| Polyurethane elastomer | 28% | 28% |
| Tile | | |
|---|---|---|
| Rubber (powder without impurities, 0,6 microns) | 60% | 65% |
| Rubber (powder without impurities, 1 micron) | 20% | 15% |
| Polyurethane elastomer | 20% | 20% |
where percentages are the weight with respect to the total weight and the figures in brackets show the grain size of the component.

19. A method for obtaining a compacted material according to any of claims 1 to 18, which involves mixing the raw materials, molding and pressing the resulting mixture.

20. A method according to claim 19, which involves:
a) mixing a polyurethane prepolymer finished in isocyanate with a polyol until obtaining a homogenous mixture;
b) adding the rubber onto said homogenous mixture of polyurethane prepolymer and polyol;
c) adding the mixture resulting from stage b) to a mold in order to form it by pressing;
d) closing the mold and applying the required pressure for a suitable time in order to compact the mixture inserted in the mold;
e) drying the composite material resulting from the pressing operation at a suitable temperature and for a suitable time, without removing the lid of the mold; and
f) removing the composite material made of polyurethane and rubber from the mold.

21. A method according to claim 20, in which said polyurethane prepolymer finished in isocyanate contains aromatic group.

22. , A method according to claim 20, in which said polyol is 1,4-butanediol.

23. A method according to claim 20, in which the rubber is selected from among natural rubber, synthetic rubber, recycled rubber, non-recycled rubber and their mixtures.

24. A method according to claim 23, in which the rubber is used in the form of powder, chippings, fiber, or their mixtures.

25. A method according to claim 24, in which the rubber is used in the form of powder with a grain size of 1 mm or smaller.

26. A method according to claim 24, in which the rubber is used in the form of chippings, with a grain size between 1 and 5 mm.

27. A method according to claim 24, in which the rubber is used in the form of fibers, with a grain size between 1 and 50 mm.

28. A method according to claims 20, in which the pressure to be applied is less than 500 kg/cm² (approximately 49 MPa).

29. A method according to claim 20, in which the temperature lies between 15°C and 85°C

30. A method according to claim 20, in which the press time is less than 36 hours.

31. A method according to claim 20, in which the drying time is less than 3 days after the pressing operation has finished.

## Patentansprüche

1. Ein verdichtetes Material, welches eine Mischung aus Polyurethanelastomer und Gummi enthält, bei einem Anteil zwischen 5% und 40% Gewicht an Polyurethanelastomer.

2. Ein Material nach Anspruch 1, welches zwischen 95% und 60% Gewicht an Gummi enthält.

3. Ein Material nach Anspruch 1, wobei das genannte Polyurethanelastomer durch die vor Ort - Reaktion zwischen einem mit Isocyanat terminierten Polyurethan Vorpolymer mit mehrwertigem Alkohol erhalten wird.

4. Ein Material nach Anspruch 3, wobei das genannte mit Isocyanat terminierte Polyurethan Vorpolymer aromatische Gruppen enthält.

5. Ein Material nach Anspruch 3, wobei der genannte mehrwertige Alkohol aus 1,4-Butandiol besteht.

6. Ein Material nach Anspruch 1, wobei das Gummi aus natürlichem, synthetischem, wieder aufbereitetem, nicht regeneriertem Gummi und deren Mischungen besteht.

7. Ein Material nach Anspruch 6, wobei das Gummi aus wieder aufbereitetem Gummi besteht.

8. Ein Material nach Anspruch 1, welches zudem einen oder mehrere Zusatzstoffe aus Feuerschutzmitteln, Wärmedämmstoffen, Schalldämmmaterialien, elektrischen Isolierungen, Pigmenten, wasserdichte Materialien sowie deren Mischungen enthält.

9. Ein Material nach Anspruch 1, welches zudem einen Kern zur Entfernung oder Verminderung der Flexibilität des Materials enthält.

10. Ein Material nach Anspruch 9, wobei der genannte Kern aus Kunststoffmaterial besteht.

11. Ein Material nach Anspruch 10, wobei der genannte Kern aus Kunststoffmaterial besteht, welches aus Polyäthylen (PE), Polypropylen (PP), Polystyrol (PS), Polyester (PET) und deren gemahlenen und gespritzten Mischungen ausgewählt wurde.

12. Ein Material nach Anspruch 1, welches aus einer einzigen gepressten Schicht besteht.

13. Ein Material nach Anspruch 1, in Form einer Fliese mit folgender Zusammensetzung:
| | |
|---|---|
| Polyurethanelastomer | 20% |
| Gummi | 80% |
wobei die Prozentsätze das jeweilige Gewicht im Verhältnis zum Gesamtgewicht angeben.

14. Ein Material nach Anspruch 1, in Form eines ruhenden Blocks mit folgender Zusammensetzung:
| | |
|---|---|
| Polyurethanelastomer | 40% |
| Gummispäne (1-3 mm) | 30% |
| Gummipulver (0,6 mm) | 30% |
wobei die Prozentsätze das jeweilige Gewicht im Verhältnis zum Gesamtgewicht und die Zahlen in Klammern die Partikelgröße des Teils angeben.

15. Ein Material nach Anspruch 1, in Form eines Hartverbundpanels mit folgender Zusammensetzung:
| | |
|---|---|
| Polyurethanelastomer | 30% |
| Gummispäne (1-3 mm) | 40% |
| Gummifaser und Substrate | 20% |
| Stoff | 10% |
wobei die Prozentsätze das jeweilige Gewicht im Verhältnis zum Gesamtgewicht und die Zahlen in Klammern die Partikelgröße des Teils angeben.

16. Ein Material nach Anspruch 1, in Form einer isolierten Kachel mit folgender Zusammensetzung:
| | |
|---|---|
| Gummifaser (1-3 mm) | 31% |
| Gummifaser (0,6 - 1 mm) | 24% |
| Wieder verwertete Substrate | 19% |
| Wieder verwertetes Tuch (0,5 x 1 cm) | 7% |
| Polyurethanelastomer | 19% |
wobei die Prozentsätze das jeweilige Gewicht im Verhältnis zum Gesamtgewicht und die Zahlen in Klammern die Partikelgröße des Teils angeben.

17. Ein Material nach Anspruch 1, in Form einer isolierten Bodenfliese mit einer isolierten Unterschicht und einer Oberschicht oder Fliese, mit folgender Zusammensetzung der Schichten:
| Isolierte Schicht: | |
|---|---|
| Gummifaser (2-5 mm) | 30% |
| Gummispäne (1-3 mm) | 20% |
| Wieder verwertete Substrate (1 - 4 mm) | 12% |
| Wieder verwertetes Tuch (0,5x 1 cm) | 10% |
| Polyurethanelastomer | 28% |
| Fliese: | |
|---|---|
| Gummi (Pulver ohne Unreinheiten, 0,6 Mikron) | 60% |
| Gummi (Pulver ohne Unreinheiten, 1 Mikron) | 20% |
| Polyurethanelastomer | 20% |
wobei die Prozentsätze das jeweilige Gewicht im Verhältnis zum Gesamtgewicht und die Zahlen in Klammern die Partikelgröße des Teils angeben.

18. Ein Material nach Anspruch 1, in Form einer isolierten Fliese ohne Kern mit einer isolierten Unterschicht und einer Oberschicht oder Fliese, mit folgender Zusammensetzung der Schichten:
| | [A] | [B] |
|---|---|---|
| Isolierte Schicht: | | |
| Gummifaser (2-5 mm) | 20% | 10% |
| Gummispäne (1-3 mm) | 15% | 20% |
| Gummipulver (0,3 - 1 mm) | 15% | 20% |
| Wieder verwertete Substrate (1-4 mm) | 12% | 12% |
| Wieder verwertetes Tuch (0,5x 1 cm) | 10% | 10% |
| Polyurethanelastomer | 28% | 28% |
| Fliese: | | |
|---|---|---|
| Gummi (Pulver ohne Unreinheiten, 0,6 Mikron) | 60% | 65% |
| Gummi (Pulver ohne Unreinheiten, 1 Mikron) | 20% | 15% |
| Polyurethanelastomer | 20% | 20% |
wobei die Prozentsätze das jeweilige Gewicht im Verhältnis zum Gesamtgewicht und die Zahlen in Klammern die Partikelgröße des Teils angeben.

19. Eine Verfahrensweise, ein gepresstes Material nach einem der Ansprüche 1 bis 18 zu erhalten, wonach die Rohmaterialen zur letztendlichen Mischung gemischt, gemahlen und gepresst werden.

20. Eine Verfahrensweise nach Anspruch 19, welche folgendes beinhaltet:
a) Die Mischung eines in Isocyanat terminierten Polyurethan Vorpolymer mit mehrwertigem Alkohol bis zum Erhalt einer homogenen Mischung;
b) Hinzufügen des Gummis zu der genannten homogenen Mischung aus Polyurethan Vorpolymer und mehrwertigem Alkohol;
c) Eingeben dieser Mischung aus Schritt b) in eine Form, um es durch Pressen zu formen;
d) Schließen der Form und Anwenden des nötigen Drucks für die geeignete Zeit, um die in die Form gefüllte Mischung zu pressen;
e) Trocknen des gepressten Materials aus dem Pressvorgang bei der geeigneten Temperatur und so lange wie nötig ohne die Abdeckung der Form zu entfernen und
f) Herausnehmen des gepressten Materials aus Polyurethan und Gummi aus der Form.

21. Eine Verfahrensweise nach Anspruch 20, in der das in Isocyanat terminierte Polyurethan Vorpolymer aromatische Gruppen enthält.

22. Eine Verfahrensweise nach Anspruch 20, in der der mehrwertige Alkohol ein 1,4-Butandiol ist.

23. Eine Verfahrensweise nach Anspruch 20, wobei das Gummi aus natürlichem, synthetischem, wieder aufbereitetem, nicht regeneriertem Gummi und deren Mischungen besteht.

24. Eine Verfahrensweise nach Anspruch 23, wobei das Gummi in Form von Pulver, Spänen, Fiber oder deren Mischungen verwendet wird.

25. Eine Verfahrensweise nach Anspruch 24, in der das Gummi in Form von Pulver mit einer Korngröße von 1 mm oder kleiner verwendet wird.

26. Eine Verfahrensweise nach Anspruch 24, in der das Gummi in Form von Spänen mit einer Korngröße von 1 bis 5 mm verwendet wird.

27. Eine Verfahrensweise nach Anspruch 24, in der das Gummi in Form von Fasern mit einer Korngröße von 1 bis 50 mm verwendet wird.

28. Eine Verfahrensweise nach Anspruch 20, bei der der anzuwendende Druck weniger als 500 kg/cm² (ca. 49 MPa) beträgt.

29. Eine Verfahrensweise nach Anspruch 20, bei der die Temperatur zwischen 15°C und 85°C liegt.

30. Eine Verfahrensweise nach Anspruch 20, bei der die Presslänge weniger als 36 Stunden beträgt.

31. Eine Verfahrensweise nach Anspruch 20, bei der die Trockenzeit nach Beendigung des Pressvorgangs weniger als 3 Tage beträgt.

## Revendications

1. Une matière compactée comprenant un mélange d'un élastomère de polyuréthane et du caoutchouc, qui comprend entre 5% et 40% en poids d'élastomère de polyuréthane.

2. Une matière selon la revendication 1, qui comprend entre 95% et 60% en poids de caoutchouc.

3. Une matière selon la revendication 1, dans laquelle ledit élastomère de polyuréthane est obtenu sur place en soumettant à une réaction un prépolymère de polyuréthane terminé par de l'isocyanate avec un polyol.

4. Une matière selon la revendication 3, dans laquelle ledit prépolymère de polyuréthane terminé par de l'isocyanate contient des groupements aromatiques.

5. Une matière selon la revendication 3, dans laquelle ledit polyol est 1,4-butanediol.

6. Une matière selon la revendication 1, dans laquelle le caoutchouc est choisi parmi le caoutchouc naturel, le caoutchouc synthétique, le caoutchouc recyclé, le caoutchouc non-recyclé et leurs mélanges.

7. Une matière selon la revendication 6, dans laquelle le caoutchouc est un caoutchouc recyclé.

8. Une matière selon la revendication 1, qui comprend en outre, un ou plusieurs additifs choisis parmi des agents ignifuges, des isolants thermiques, des matériaux d'isolement acoustique, isolants électriques, pigments, matériaux étanches a l'eau et leurs mélanges.

9. Une matière selon la revendication 1, qui comprend en outre, un noyau permettant d'éliminer ou réduire la flexibilité de la matière.

10. Une matière selon la revendication 9, dans laquelle ledit noyau est fait en une matière plastique.

11. Une matière selon la revendication 11, dans laquelle ledit noyau est fait en une matière plastique choisie parmi le polyéthylène (PE), polypropylène (PP), polystyrène (PS), polyester (PET) y leurs mélanges, broyés et extrudés.

12. Une matière selon la revendication 1, configurée sous forme d'une seule couche compactée.

13. Une matière selon la revendication 1, configurée sous forme d'une dalle ayant la composition suivante
| | |
|---|---|
| Élastomère de polyuréthane | 20% |
| Caoutchouc | 80% |
où les pourcentages sont le poids par rapport au poids total.

14. Une matière selon la revendication 1, configurée sous forme de silentbloc avec la composition suivante :
| | |
|---|---|
| Élastomère de polyuréthane | 40% |
| Copeaux de caoutchouc (1-3 mm) | 30% |
| Poudre de caoutchouc (0,6 mm) | 30% |
où les pourcentages sont le poids par rapport au poids total et les chiffres entre parenthèses montrent la granulométrie du composant.

15. Une matière selon la revendication 1, configurée sous forme d'un panneau composite dur avec la composition suivante :
| | |
|---|---|
| Élastomère de polyuréthane | 30% |
| Copeaux de caoutchouc (1-3 mm) | 40% |
| Fibres et substrats de caoutchouc | 20% |
| Tissu | 10% |
où les pourcentages sont le poids par rapport au poids total et les chiffres entre parenthèses montrent la granulométrie du composant.

16. Une matière selon la revendication 1, configurée sous forme d'une dalle isolante avec la composition suivante :
| | |
|---|---|
| Fibre de caoutchouc (1 - 3 mm) | 30% |
| Fibre de caoutchouc (0,6 - 1 mm) | 24% |
| Substrats recyclés (1-4 mm) | 19% |
| Tissus recyclés (0,5 x 1 cm) | 7% |
| Elastomère de polyuréthane | 19% |
où les pourcentages sont le poids par rapport au poids total et les chiffres entre parenthèses montrent la granulométrie du composant.

17. Une matière selon la revendication 1, configurée sous forme d'une dalle de sol isolante ayant une couche isolante inférieure et une couche supérieure ou dalle, avec la composition suivante de ses couches:
| Couche isolante : | |
|---|---|
| Fibre de caoutchouc (2-5 mm) | 30% |
| Copeaux de caoutchouc (1-3 mm) | 20% |
| Substrats recyclés (1-4 mm) | 12% |
| Tissus recyclés (0,5 x 1 cm) | 10% |
| Elastomère de polyuréthane | 28% |
| Dalle : | |
|---|---|
| Caoutchouc (poudre sans impureté, 0,6 microns) | 60% |
| Caoutchouc (poudre sans impureté, 1 micron) | 20% |
| Elastomère de polyuréthane | 20% |
où les pourcentages sont le poids par rapport au poids total et les chiffres entre parenthèses montrent la granulométrie du composant.

18. Une matière selon la revendication 1, configurée sous forme d'une dalle isolante sans noyau, qui inclut une couche isolante inférieure et une couche supérieure ou dalle, avec les compositions suivantes [A] ou [B] de ses couches:
| Couche isolante : | [A] | [B] |
|---|---|---|
| Fibre de caoutchouc (2 - 5 mm) | 20% | 10% |
| Copeaux de caoutchouc (1-3 mm) | 15% | 20% |
| Poudre de caoutchouc (0,3 - 1 mm) | 15% | 20% |
| Substrats recyclés (1-4 mm) | 12% | 12% |
| Tissus recyclés (0,5 x 1 cm) | 10% | 10% |
| Elastomère de polyuréthane | 28% | 28% |
| Dalle : | | |
|---|---|---|
| Caoutchouc (poudre sans impureté, 0,6 microns) | 60% | 65% |
| Caoutchouc (poudre sans impureté, 1 micron) | 20% | 15% |
| Elastomère de polyuréthane | 20% | 20% |
où les pourcentages sont le poids par rapport au poids total et les chiffres entre parenthèses montrent la granulométrie du composant.

19. Une méthode pour obtenir une matière compacté selon l'une quelconque des revendications 1 à 18, qui consiste au mélange des matières premières, moulage et pressage du mélange résultant.

20. Une méthode selon la revendication 1, qui consiste à :
a) mélanger un prépolymère de polyuréthane fini dans de l'isocyanate avec un polyol jusqu'à l'obtention d'un mélange homogène ;
b) ajouter le caoutchouc sur ledit mélange homogène de prépolymère de polyuréthane et polyol ;
c) ajouter le mélange résultant de l'étape b) à un moule afin de le former par pressage ;
d) fermer le moule et appliquer la pression nécessaire pendant une période temps appropriée afin de compacter le mélange introduit dans le moule;
e) sécher la matière composite résultante de l'opération de pressage a une température appropriée et pendant une période de temps appropriée, sans enlever le couvercle du moule ; et
f) retirer du moule la matière composite faite de polyuréthane et de caoutchouc.

21. Une méthode selon la revendication 20, dans laquelle ledit prépolymère de polyuréthane fini dans de l'isocyanate contient un groupe aromatique.

22. Une méthode selon la revendication 20, dans laquelle ledit polyol est 1,4-butanediol.

23. Une méthode selon la revendication 20, dans laquelle le caoutchouc est choisi parmi le caoutchouc naturel, le caoutchouc synthétique, le caoutchouc recyclé, le caoutchouc non-recyclé et leurs mélanges.

24. Une méthode selon la revendication 23, dans laquelle le caoutchouc est utilisé sous la forme de poudre, copeaux, fibres ou leurs mélanges.

25. Une méthode selon la revendication 24, dans laquelle le caoutchouc est utilisé sous la forme de poudre avec une granulométrie de 1 mm ou moins.

26. Une méthode selon la revendication 24, dans laquelle le caoutchouc est utilisé sous la forme de copeaux, avec une granulométrie entre 1 et 5 mm.

27. Une méthode selon la revendication 24, dans laquelle le caoutchouc est utilisé sous la forme de fibres, avec une granulométrie entre 1 et 50 mm.

28. Une méthode selon la revendication 20, dans laquelle la pression à appliquer est inférieure à 500 kg/cm² (environ 49 Mpa).

29. Une méthode selon la revendication 20, dans laquelle la température est entre 15°C et 85°C.

30. Une méthode selon la revendication 20, dans laquelle le temps de pressage est inférieur à 36 heures.

31. Une méthode selon la revendication 20, dans laquelle le temps de séchage est inférieur à 3 jours après la conclusion de l'opération de pressage.
